# EUROPÄISCHE PATENTANMELDUNG

(11) **EP 1 318 654 A2**
(43) Veröffentlichungstag der Anmeldung: **11.06.2003**
(21) Anmeldenummer: 02024260.8
(22) Anmeldetag: 31.10.2002
(51) Int. Cl.: H04M 3/22

(54) **Anordnung zur Steuerung und/oder Überwachung von mindestens zwei Kommunikationssystemen durch mindestens eine Anwendung**

(30) Priorität: 06.12.2001 DE 10160027
(71) Anmelder: SIEMENS AKTIENGESELLSCHAFT, 80333 München (DE)
(72) Erfinder: Bilke, Volmar, 33154 Salzkotten (DE); Bozionek, Bruno, 33178 Borchen (DE); Hemkemeyer, Dieter, 59302 Ölde (DE); Langer, Uwe, 33102 Paderborn (DE); Zimmermann, Rainer, 33106 Paderborn (DE)

(57) **Zusammenfassung**

Eine Anordnung dient der Steuerung und/oder Überwachung von mindestens zwei Kommunikationssystemen (1, 1a, 1b) durch mindestens eine Anwendung (2, 2a, 2b). Dazu werden jeweils Daten von einer Anwendung (2, 2a, 2b) zu einem Kommunikationssystem (1, 1a, 1b) und/oder umgekehrt von einem Kommunikationssystem (1, 1a, 1b) zu einer Anwendung (2, 2a, 2b) übertragen. Eine zwischengeschalteter gemeinsamer Dienst (4) empfängt und verarbeitet die Daten jeweils und leitet sie anschließend weiter, wobei der Dienst (4) die Daten zu den Kommunikationssystemen (1, 1a, 1b) jeweils im gleichen Datenformat absendet und/oder von den Kommunikationssystemen (1, 1a, 1b) empfängt. Von den Kommunikationssystemen (1, 1a, 1b) verwendet mindestens eines ein anderes Datenformat, wobei zur Anpassung der Datenformate jeweils mindestens ein Umsetzmittel (5, 5a, 5b) zwischen dem Kommunikationssystem (1, 1a, 1b) und dem Dienst (4) geschaltet ist. Bei dieser Anordnung muss die Anwendung nicht auf dasjenige Datenformat voreingestellt werden, welches von dem Kommunikationssystem zur Übertragung von Steuer- und Zustandsinformationen verwendet wird.

## Beschreibung

Die Erfindung betrifft eine Anordnung zur Steuerung und/oder Überwachung von mindestens zwei Kommunikationssystemen durch mindestens eine Anwendung.

Anordnungen, bei denen Steuer- und Zustandsinformationen zwischen Kommunikationssystemen und Anwendungen ausgetauscht werden, sind als CTI-Lösungen (CTI = Computer Telephony Integration) allgemein bekannt. Ein Anwendungsgebiet von CTI-Lösungen ist beispielsweise, Vermittlungsleistungsmerkmale in Kommunikationsanlagen zu aktivieren, zu deaktivieren und zu steuern. CTI-Lösungen erlauben überdies das Anzeigen und Weiterverarbeiten von Zustandsinformationen, welche die Teilnehmerendgeräte an Kommunikationssystemen betreffen, also beispielsweise der Rufzustand "frei" oder "besetzt". Man spricht in diesem Zusammenhang auch von "Monitoring", weil verschiedene Teilnehmerendgeräte überwacht werden und der Eintritt bestimmter Ereignisse gemeldet wird, z.B. ein eingehender Ruf.

Sowohl zur Steuerung von Leistungsmerkmalen mit Hilfe von Steuerinformationen als auch zur Anzeige und Weiterverarbeitung von Zustandsinformationen ist ein Datenaustausch in der Regel in beiden Richtungen erforderlich, also sowohl von der Anwendung zu der Kommunikationsanlage hin als auch in umgekehrter Richtung.

Im folgenden wird dieser Datenaustausch als Protokoll bezeichnet. Das Protokoll legt die Nachrichtenfolge und deren Struktur/Inhalte (Datenformate) fest. Die Anwendungen sind in der Regel auf einem Computer installiert, wo sie auf einer Programmierschnittstelle aufsetzen, dem sogenannten API (API = Application Programming Interface). Eine häufig auch als "Treiber-Software" bezeichnete Software stellt das API zur Verfügung und tauscht die übertragenen Daten mit einem zentral im Netzwerk angeordneten Server als gemeinsamen Dienst aus, der auch als Telefonie- oder CTI-Server bezeichnet wird. Der Datenaustausch zwischen der Anwendung und dem Telefonie-Server erfolgt nach einem festgelegten Protokoll, beispielsweise dem CSTA-Protokoll.

An einem Telefonie-Server können mehrere Anwendungen angeschlossen sein, mit denen die Steuer- und Zustandsinformationen ausgetauscht werden. Im Telefonie-Server findet die Zuordnung und Verteilung der zwischen den Anwendungen und den Kommunikationssystemen auszutauschenden Daten statt. Zur Kommunikation mit dem Telefonie-Server verfügen Kommunikationssysteme über spezielle Schnittstellen, die ebenfalls allgemein als CTI-Schnittstellen bezeichnet werden. Das Protokoll der über diese CTI-Schnittstellen übertragenen Steuer- und Zustandsinformationen hängt vom Funktionsumfang des jeweiligen Kommunikationssystems ab. Die Protokolle sind oft herstellerspezifisch (proprietär).

Bei den bekannten Anordnungen hat sich als nachteilig erwiesen, daß die Anwendung auf dasjenige Protokoll voreingestellt werden muß, welches von dem Kommunikationssystem zur Übertragung von Steuer- und Zustandsinformationen verwendet wird.

Aufgabe der Erfindung ist es, eine Anordnung vorzuschlagen, bei der der oben genannte Nachteil überwunden wird.

Die Lösung dieser Aufgabe ist durch die im Anspruch 1 angegebenen Merkmale gegeben. Durch die kennzeichnenden Merkmale der Unteransprüche ist die Anordnung in vorteilhafter Weise weiter ausgestaltet.

Die Lösung ist eine Anordnung zur Steuerung und/oder Überwachung von mindestens zwei Kommunikationssystemen durch mindestens eine Anwendung, wobei jeweils Daten von einer Anwendung zu einem Kommunikationssystem und/oder umgekehrt von einem Kommunikationssystem zu einer Anwendung übertragen werden, mit einem zwischengeschalteten gemeinsamen Dienst, der die Daten jeweils empfängt, verarbeitet und ggf. anschließend weiterleitet, und wobei der Dienst die Daten zu den Kommunikationssystemen jeweils im gleichen Datenformat absendet und/oder von den Kommunikationssystemen empfängt, von denen mindestens ein Kommunikationssystem ein anderes Datenformat verwendet, wobei zur Anpassung der Datenformate jeweils mindestens ein Umsetzmittel zwischen diesem Kommunikationssystem und dem Dienst geschaltet ist.

Eine Anpassung der Anwendungen oder des gemeinsamen Dienstes an jedes Datenformat, welches von den Kommunikationssystemen zum Austausch von Steuer- und Zustandsinformationen verwendet wird, erübrigt sich, wenn Umsetzmittel die Daten von den Datenformaten der Kommunikationssysteme in ein gleiches Datenformat, und in umgekehrter Richtung, umsetzt. Weitere Kommunikationssysteme können so in bestehende Anordnungen integriert werden, ohne dass dem zentralen Dienst oder einer Anwendung ein weiteres Datenformat hinzugefügt werden muss.

Anwendungen kann eine Standardschnittstelle dadurch bereitgestellt werden, dass das gleiche Datenformat des Dienstes ein standardisiertes Datenformat ist.
Wenn das andere Datenformat des Kommunikationssystems in einem proprietären Protokoll definiert ist, ist ein besonders effektiver Zugriff auf die Steuer- und Zustandsfunktionen des Kommunikationssystems möglich.

Ein großer Funktionsumfang kann mit den Anwendungen realisiert werden, indem die übertragenen Daten Steuerinformationen zur Steuerung der Kommunikationssysteme und Zustandsinformationen der Kommunikationssysteme umfassen.

Umsetzmittel, gemeinsame Dienste und Kommunikationssysteme unterschiedlicher Hersteller lassen sich vorteilhaft miteinander betreiben, wenn das gleiche Datenformat des Dienstes in einem harmonisierten Protokoll definiert ist.

Wenn der Funktionsumfang des harmonisierten Protokolls durch eine jeweilige Ausprägung des Protokolls jeweils dem Funktionsumfang des zugeordneten Kommunikationssystems angepasst ist, lassen sich Kommunikationssysteme mit unterschiedlichem Funktionsumfang in einer Anordnung gleichzeitig einsetzen, ohne dass der kleinere Funktionsumfang eines Kommunikationssystems die Funktionalität, die sich mit den anderen Kommunikationssystemen erreichen lässt, beschränkt.

Anwendungen können sich auf den Funktionsumfang der angeschlossenen Kommunikationssysteme selbsttätig einstellen, wenn das harmonisierte Protokoll ein standardisiertes CSTA-Protokoll (CSTA = Computer Supported Telephony Application) ist.

Wenn zwischen dem Umsetzmittel und dem Kommunikationssystem ein systemspezifisches Vorschaltmittel zur Voranpassung angeordnet ist, können standardisierte Umsetzmittel zur Anschaltung von Kommunikationssystemen mit proprietären Datenformaten verwendet werden. Im Vorschaltmittel lassen sich Sicherheitsmechanismen zum Schutz der jeweiligen Kommunikationssysteme vor fehlerhaften Steuerinformationen anordnen.

Anwendung können entfernt vom gemeinsamen Dienst angeordnet werden, wenn die Anwendung oder die Anwendungen und der Dienst über ein Netzwerk miteinander verbunden sind.

Wenn das Netzwerk ein LAN ist, ist für die Verbindungen zwischen den Anwendungen und den Kommunikationssystemen ein besonders effektiver Datenschutz durch Standardverfahren realisierbar.

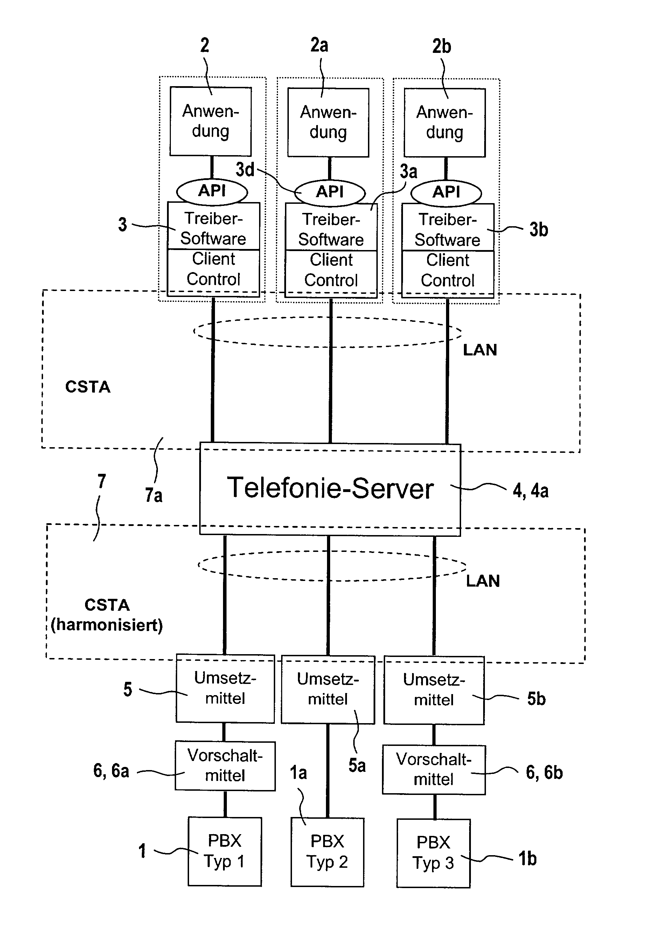

Ein Ausführungsbeispiel einer erfindungsgemäßen Anordnung zur Steuerung und/oder Überwachung von Kommunikationssystemen wird nachfolgend anhand der Zeichnung beschrieben. Die einzige Figur zeigt dabei eine schematische Darstellung einer Vorrichtung zum Datenaustausch.

Die Figur zeigt eine Kommunikationsanordnung, in der Steuerund Zustandsinformationen zwischen Anwendungen 2, 2a, 2b und Kommunikationssystemen 1, 1a, 1b ausgetauscht werden können.

Nachfolgend wird die Steuerung einer der beiden Kommunikationssysteme 1a durch eine der Anwendungen 2a beispielhaft beschrieben.

Zur Übertragung einer Steuerinformation von der Anwendung 2a zum Kommunikationssystem 1a benutzt die Anwendung 2a z.B. ein TAPI-Interface (mit Treiber-Software 3a). Dabei setzt die Anwendung 2a anwendungsseitig auf einer Programmierschnittstelle 3d, dem sogenannten API, auf. Die Anwendung 2a und die Treiber-Software 3a sind gemeinsam auf einem PC installiert. Die Steuerinformation wird von der Treiber-Software 3a über ein Netzwerk LAN zum Telefonie-Server 4a übertragen, der den gemeinsamen Dienst 4 zur Verfügung stellt. (Selbstverständlich kann der gemeinsame Dienst 4 auch auf einem gemeinsamen PC mit einer Treiber-Software 3, 3a, 3b und einer Anwendung 2, 2a, 2b installiert sein.)

Das Datenformat, welches zur Übertragung von Zustands- und Steuerinformationen zwischen jeder Treiber-Software 3, 3a, 3b und dem Telefonie-Server 4a verwendet wird, ist ein Datenformat gemäß dem CSTA-Protokoll. Falls sich das von den Anwendungen 2, 2a, 2b verwendete Datenformat von diesem Datenformat unterscheidet, wird in der Treiber-Software 3, 3a, 3b eine Umsetzung der Zustands- und Steuerinformationen in das jeweils andere Datenformat vorgenommen. Das kann beispielsweise durch eine tabellarische Abbildung (in der Figur Client Control) von Protokollelementen, dem sog. "Mapping", geschehen.

Im Telefonie-Server 4a wird auf Basis von Adressinformationen entschieden, zu welchem der Kommunikationssysteme 1, 1a, 1b die Steuerinformation übertragen werden soll. Er funktioniert auch als Zwischenspeicher (engl.: "Cache") und Verteiler für Zustandsinformationen. Aufgrund seiner Cache-Funktion kann der Telefonie-Server 4a die Weiterleitung von Steuerinformationen ggf. auch unterlassen. Das ist z.B. der Fall, wenn die durch die Steuerinformation zu beeinflussende Funktion in den Kommunikationssystemen 1, 1a, 1b bereits durch vorhergehende Steuerinformationen aktiviert bzw. deaktiviert ist.

Hier überträgt der Telefonie-Server 4a die Steuerinformation zunächst an das dem Kommunikationssystem 1a zugeordneten Umsetzmittel 5a.

Jedem Kommunikationssystem 1, 1a, 1b ist ein Umsetzmittel 5, 5a, 5b zugeordnet. Die Umsetzmittel 5, 5a, 5b sind auf nicht dargestellten PCs installiert, die über ein IP-Netz (IP = Internet-Protokoll), beispielsweise LAN, sowohl mit dem Telefonie-Server 4a als auch mit den Kommunikationssystemen 1, 1a, 1b verbunden sind. Selbstverständlich können die Umsetzmittel 5, 5a, 5b auch auf einem gemeinsamen PC installiert sein, und auch andere Übertragungswege als ein IP-Netz LAN, z.B. serielle Datenleitungen oder ISDN-Verbindungen, können verwendet werden.

Die Steuerinformation wird zwischen dem Telefonie-Server 4a und dem Umsetzmittel 5a in einem standardisierten Datenformat übertragen, welches im harmonisierten CSTA-Protokoll definiert ist. Der Telefonie-Server 4a kommuniziert mit allen Umsetzmitteln 5, 5a, 5b unter Verwendung dieses gleichen Datenformats. Man spricht daher auch von einer "harmonisierten Protokoll-Ebene" oder auch von einem harmonisierten Protokoll-Layer 7. (Genauso kann auch bei den Verbindungen zwischen jeder Treiber-Software 3, 3a, 3b und dem Telefonie-Server 4a von einem harmonisierten Protokoll-Layer 7a gesprochen werden, wenn der Datenaustausch über jede dieser Verbindungen gemäß desselben Protokolls durchgeführt wird.)

Dem unterschiedlichen Funktionsumfang verschiedener Kommunikationssysteme wird entsprochen, indem im Protokoll-Layer 7 für die Verbindungen zu den verschiedenen Kommunikationssystemen unterschiedliche Protokollausprägungen des CSTA-Protokolls verwendet werden, die auch als "Profile" bezeichnet werden. Im Protokoll sind dazu Mechanismen definiert, mit deren Hilfe die Anwendungen 2, 2a, 2b Informationen über die verfügbaren, im jeweiligen Profile definierten Leistungsmerkmale der Kommunikationssysteme 1, 1a, 1b abrufen können. Ein Umsetzmittel 5, 5a, 5b kann nur dann entfallen, wenn die zugeordnete Kommunikationssystem 1, 1a, 1b zum Austausch der Steuer- und Zustandsinformationen bereits ein im CSTA-Protokoll definiertes Datenformat verwendet.

Das Umsetzmittel 5a setzt die zu übertragende Steuerinformation in das Datenformat um, welches von dem Kommunikationssystem 1a für die Schnittstelle zum Austausch von Steuer- und Zustandsinformationen verwendet wird, die als CTI-Schnittstelle ausgebildet ist. Dieses Datenformat ist in einem eigenen, meist herstellerspezifischen, Protokoll definiert; man spricht daher auch von einem proprietären Datenformat. Die Steuerinformation wird dann in diesem proprietären Datenformat vom Umsetzmittel 5a zum Kommunikationssystem 1a übertragen.

In der Figur sind zwischen den Umsetzmitteln 5, 5b und den Kommunikationssystemen 1, 1b weitere Umsetzmittel 6a, 6b als Vorschaltmittel 6 angeordnet. Solche Vorschaltmittel 6 werden beispielsweise verwendet, um einen gesicherten Zugang mit einer sog. Firewall-Funktionalität zu einer - in der Regel nicht offengelegten - herstellerspezifischen Schnittstelle zu bilden. Sie sind häufig bereits in Kommunikationssystemen herstellerseitig vorhanden, oder werden vom Hersteller eines Kommunikationssystems als zusätzliche Einrichtung bereitgestellt. Das Vorschaltmittel 6 ändert nochmals das Datenformat der Steuerinformation, die vom Umsetzmittel 5a zum Kommunikationssystem 1a übertragen werden soll.

Die Steuer- und Zustandsinformationen, die von den Kommunikationssystemen 1, 1a, 1b zu den Anwendungen 2, 2a, 2b übertragen werden, durchlaufen den beschriebenen Weg in umgekehrter Richtung. Sowohl bei der Übertragung von Steuerinformationen als auch von Zustandsinformationen findet meist eine Datenübertragung in beiden Richtungen, also sowohl von den Kommunikationssystemen 1, 1a, 1b zu den Anwendungen 2, 2a, 2b hin, als auch umgekehrt, statt. Das liegt zum einen daran, dass Zustandsinformationen von den Anwendungen 2, 2a, 2b zunächst bei dem Kommunikationssystem angefordert werden, bevor sie von dieser übermittelt werden, und zum anderen daran, dass bei der Ausführung von LeistungsmerkmalÄnderungen und anderen Steuerungsvorgängen regelmäßig Quittierungsmeldungen als Antwort auf eine Aufforderung versendet werden.

## Patentansprüche

1. Anordnung zur Steuerung und/oder Überwachung von mindestens zwei Kommunikationssystemen (1, 1a, 1b) durch mindestens eine Anwendung (2, 2a, 2b),
wobei jeweils Daten von einer Anwendung (2, 2a, 2b) zu einem Kommunikationssystem (1, 1a, 1b und/oder umgekehrt von einem Kommunikationssystem (1, 1a, 1b) zu einer Anwendung (2, 2a, 2b) übertragen werden,
mit einem zwischengeschalteten gemeinsamen Dienst (4), der die Daten jeweils empfängt, verarbeitet und ggf. anschließend weiterleitet, und
wobei der Dienst (4) die Daten zu den Kommunikationssystemen (1, 1a, 1b) jeweils im gleichen Datenformat absendet und/oder von den Kommunikationssystemen (1, 1a, 1b) empfängt,
von denen mindestens ein Kommunikationssystem (1, 1a, 1b) ein anderes Datenformat verwendet,
wobei zur Anpassung der Datenformate jeweils mindestens ein Umsetzmittel (5, 5a, 5b) zwischen dem Kommunikationssystem (1, 1a, 1b) und dem Dienst (4) geschaltet ist.

2. Anordnung nach Anspruch 1,
**dadurch gekennzeichnet,**
**dass** das gleiche Datenformat des Dienstes (4) ein standardisiertes Datenformat ist.

3. Anordnung nach Anspruch 1 oder 2,
**dadurch gekennzeichnet,**
**dass** das andere Datenformat des Kommunikationssystems (1, 1a, 1b) in einem proprietären Protokoll definiert ist.

4. Anordnung nach einem der Ansprüche 1 - 3,
**dadurch gekennzeichnet,**
**dass** die Daten Steuerinformationen zur Steuerung der Kommunikationssysteme (1, 1a, 1b) und Zustandsinformationen der Kommunikationssysteme (1, 1a, 1b) umfassen.

5. Anordnung nach einem der Ansprüche 1 - 4,
**dadurch gekennzeichnet,**
**dass** das gleiche Datenformat des Dienstes (4) in einem harmonisierten Protokoll definiert ist.

6. Anordnung nach Anspruch 5,
**dadurch gekennzeichnet,**
**dass** der Funktionsumfang des harmonisierten Protokolls durch eine jeweilige Ausprägung des Protokolls jeweils dem Funktionsumfang des zugeordneten Kommunikationssystems (1, 1a, 1b) angepaßt ist.

7. Anordnung nach einem der Ansprüche 5 oder 6,
**dadurch gekennzeichnet,**
**dass** das harmonisierte Protokoll ein standardisiertes CSTA-Protokoll (CSTA = Computer Supported Telephony Application) ist

8. Anordnung nach einem der Ansprüche 1 - 7,
**dadurch gekennzeichnet,**
**dass** zwischen dem Umsetzmittel (5, 5a, 5b) und dem Kommunikationssystem (1, 1a, 1b) ein systemspezifisches Vorschaltmittel (6) zur Voranpassung angeordnet ist.

9. Anordnung nach einem der Ansprüche 1 - 8,
**dadurch gekennzeichnet,**
**dass** die Anwendung (2, 2a, 2b) oder die Anwendungen (2, 2a, 2b) und der Dienst (4) über ein Netzwerk miteinander verbunden sind.

10. Anordnung nach Anspruch 9,
**dadurch gekennzeichnet,**
**dass** das Netzwerk ein LAN ist.
